# EUROPÄISCHE PATENTSCHRIFT

(11) **EP 3 214 377 B1**
(45) Veröffentlichungstag und Bekanntmachung des Hinweises auf die Patenterteilung: **05.12.2018**
(21) Anmeldenummer: 17157295.1
(22) Anmeldetag: 22.02.2017
(51) Int. Cl.: F24D 3/08, F24D 3/18, F24D 19/10, F24D 17/00

(54) **VERFAHREN ZUM BETRIEB EINER HEIZUNGSANLAGE MIT EINEM BRENNWERTKESSEL UND HEIZUNGSANLAGE**
METHOD FOR OPERATING A HEATING SYSTEM WITH A CONDENSING BOILER AND HEATING SYSTEM
PROCÉDÉ DE FONCTIONNEMENT D'UNE INSTALLATION DE CHAUFFAGE COMPRENANT UNE CHAUDIÈRE À CONDENSATION ET INSTALLATION DE CHAUFFAGE

(30) Priorität: 27.02.2016 DE 102016002407
(43) Veröffentlichungstag der Anmeldung: 06.09.2017
(73) Patentinhaber: Jaske, Wolfgang, 49811 Lingen (DE); Wolf, Peter, 26209 Hatten (DE)
(72) Erfinder: Jaske, Wolfgang, 49811 Lingen (DE); Wolf, Peter, 26209 Hatten (DE)
(74) Vertreter: Jabbusch, Matthias

(56) Entgegenhaltungen:
- EP-A2- 2 273 203
- DE-A1- 2 822 808
- DE-U1-202007 011 120
- DE-U1-202013 010 117

## Beschreibung

Die Erfindung betrifft ein Verfahren zum Betrieb einer Heizungsanlage mit einem Brennwertkessel zur Gewinnung von Wärme zu Heizzwecken in einem Heizkreislauf mit einem Wärmeübertragungssystem und zur gleichzeitigen Bereitstellung von warmem Wasser in einem Wärmespeicher, wobei dem Rücklauf des Heizkreislaufs eine Wärmepumpe zugeordnet ist, die mindestens einem Teil des Wasser im Rücklauf des Heizkreislaufs Wärmeenergie entzieht. Weiterhin betrifft die Erfindung eine Heizungsanlage mit einem Brennwertkessel zur Gewinnung von Wärme zu Heizzwecken in einem Heizkreislauf mit einem Wärmeübertragungssystem und zur gleichzeitigen Bereitstellung von Warmwasser in einem Wasserspeicher, wobei dem Rücklauf des Heizkreislaufs eine Wärmepumpe zugeordnet ist, die mindestens einem Teil des Wassers im Rücklauf des Heizkreislaufs Wärmeenergie entzieht.

Ein Verfahren und eine Heizungsanlage der eingangs genannten Art sind aus der DE 20 2007 011 120 U1 bekannt.

Bei der Brennwerttechnik wird durch die Installation eines Abgaswärmeübertragers in den Abzug des Abgases zusätzlich der Nutzungsgrad der Energie des Brennstoffs dadurch erhöht, dass das Abgas noch weiter abgekühlt und die Kondensationswärme des bei der Verbrennung entstehenden Wasserdampfs genutzt wird. Der Abgaswärmeübertrager wird mit dem kühlen Rücklauf des Heizkreislaufs beschickt und wärmt den Heizkreislauf vor. Der Wirkungsgrad der Abgaswärmegewinnung und damit der Gesamtwirkungsgrad der Wärmegewinnung wird dabei von der Rücklauftemperatur des Heizkreislaufs bestimmt. Eine effektive Wärmenutzung ist an eine niedrige Rücklauftemperatur gekoppelt. Eine niedrige Rücklauftemperatur erreicht man bevorzugt durch eine niedrige Vorlauftemperatur zum Beheizen von Räumlichkeiten, die von sich aus schon im Gegensatz zu einer hohen Vorlauftemperatur zu einem verbesserten Wirkungsgrad führt, da über die erhöhte Temperaturdifferenz zur Verbrennungstemperatur der Wärmeübergang verbessert wird. Für den lastabhängigen Betrieb des Heizsystems und einer dadurch erreichten niedrigen Rücklauftemperatur werden in modernen Brennwertheizungen die Brenner und Umwälzpumpen gesteuert und damit der Energieverbrauch minimiert.

Der gleichzeitige Betrieb von Warmwasserspeichern, die aus hygienischen Gründen eine erhöhte Temperatur benötigen und die keinen eigenständigen Brenner besitzen, ist in einem niedrigen Temperaturbereich arbeitenden Heizungssystem energetisch nicht sehr vorteilhaft, da die Wassertemperatur des zu erwärmenden Wassers höher sein muss als das Wasser im Heizkreislauf. Die Wassererwärmung benötigt einen eigenen Heizkreislauf mit einer eigenen Temperatursteuerung.

Der Einsatz von Wärmepumpen zur Wirkungsgradverbesserung von Brennwertheizungen ist im Zusammenhang mit einer weiteren Temperaturabsenkung des Abgases bekannt. Das Gebrauchsmuster DE 20 2013 010 117 U1 kühlt das Abgas durch Einrichtung eines zusätzlichen Kühlkreislaufs mit zwei Wärmepumpen ab und transferiert die zurück gewonnene Wärme auf einem höheren Temperaturniveau in den Rücklauf des Heizkreislaufs. Diese Vorgehensweise führt zu einer Temperaturerhöhung im Rücklauf, noch um den Betrag des elektrischen Aufwands erhöht, so dass der Wärmeübergang am Heizwertübertrager sich verschlechtert. Die Gebrauchsmusterschrift DE 20 2007 011 120 U1 arbeitet nach einem ähnlichen Prinzip mit dem Unterschied, dass ein Brennwertkessel mit zwei Rücklaufstutzen verwendet und nur ein Teil des Rücklaufs herunter gekühlt wird, damit dieser Teilstrang im Abgaswärmeübertrager die Kondensation des Dampfes im Abgas verbessert.

In den Schriften DE 101 15 090 A1 und EP 2 199 692 A2 wird eine Wärmepumpe dazu verwendet aus der Umgebung gewonnene Energie aus unterschiedlichen Quellen auf einen Heizkreis zu übertragen, um den Verbrauch fossiler Energie zu reduzieren. Der Einsatz der Wärmepumpen wird nicht dazu verwendet, eine möglichst geringe Rücklauftemperatur zu generieren, damit der Brennwertkessel mit dem höchst möglichen Wirkungsgrad arbeiten kann.

Der Erfindung liegt die Aufgabe zu Grunde, einen klassischen Brennwertkessel mit einem Hin- und einem Rücklaufanschluss als Verbindung z. B. zum Heizkreislauf und einem Warmwasserspeicher optimal zu betreiben.

Die Lösung dieser Aufgabe erfolgt mit einem Verfahren mit den Merkmalen des Patentanspruchs 1 und mit einer Heizungsanlage mit den Merkmalen des Patentanspruchs 8. Vorteilhafte Ausgestaltungen der Erfindung sind in den Unteransprüchen beschrieben.

Bei einem Verfahren zum Betrieb einer Heizungsanlage mit einem Brennwertkessel zur Gewinnung von Wärme zu Heizzwecken in einem Heizkreislauf mit einem Wärmeübertragungssystem und zur gleichzeitigen Bereitstellung von warmem Wasser in einem Warmwasserspeicher, wobei dem Rücklauf des Heizkreislaufes eine Wärmepumpe zugeordnet ist, die mindestens einem Teil des Wassers im Rücklauf des Heizkreislaufes Wärmeenergie entzieht, ist erfindungswesentlich vorgesehen, dass der Rücklauf des Wärmeübertragungssystems des Heizkreislaufes vollständig durch einen Verdampfer der Wärmepumpe geführt ist und dass die in der Wärmepumpe gewonnene Wärme auf einem höheren Temperaturniveau an den Zulauf zum Warmwasserspeicher gegeben wird.

Steuerungseinrichtungen des Brennwertkessels, die die Brennerleistung mit der Pumpleistung der Umwälzpumpe verknüpfen, sind nicht Gegenstand der Erfindung. Insbesondere bei Einrichtungen mit einem hohen Warmwasserverbrauch ist die hydraulische Verknüpfung der Heizung mit der Warmwasserbereitung sinnvoll. Der Betrieb einer stark genutzten Warmwasserbereitung in klassischer Verfahrensweise einer Kesselanlage für die Warmwasserbereitung, die auch noch zyklisch erfolgen kann, hat auf Grund der Betriebsweise einen vergleichsweise schlechten Wirkungsgrad, da zum Ende hin mit fortschreitender Erwärmung des Wassers die Abkühlung des Heizungswassers abnimmt. Gleiches gilt für den separaten Betrieb eines Warmwasserspeichers. Durch ein integriertes Wärmemanagement mit Einsatz einer Wärmepumpe in den Wärmegewinnungsprozess, kann der Brennwertkessel unabhängig von äußeren Einflüssen optimal genutzt werden, da durch den Einsatz einer Wärmepumpe Temperaturschwankungen auf Grund vermiedener Lastwechsel minimiert werden.

Das Heizungssystem arbeitet auf einem niedrigeren Temperaturniveau als die Warmwasserbereitung, so dass das Heizungswasser für die Warmwasserbereitung mit höherer Temperatur bereitgestellt werden muss als das Heizungswasser für das Heizungssystem. Die für die Warmwasserbereitung erforderliche zusätzliche Wärme zur Temperaturerhöhung wird aus dem gemeinsamen Rücklauf der Heizung und der Warmwasserbereitung gewonnen, indem dort der Verdampfer einer Wärmepumpe den Rücklauf kühlt und die Wärmeenergie über den Wärmepumpenprozess im Kondensator an die Heizleitung für die Warmwasserbereitung wieder abgibt. Ist der Rücklauf aus der Warmwasserbereitung noch sehr warm, was z. B. immer dann vorkommt, wenn der Warmwasserspeicher nicht genutzt wird, aber der Heizvorgang bis zur Erreichung er Solltemperatur durch die vorherige Nutzung noch nicht abgeschlossen ist, öffnet ein Mischventil die Verbindung zum Heizungsvorlauf, so dass die ungenutzte Wärme noch für die Heizung zur Verfügung steht. Die Temperaturschwankungen im Verdampfer der Wärmepumpe werden damit stark reduziert. Der aus der Wärmepumpe erfolgende Rücklauf zum Abgaswärmeübertrager des Brennwertkessels ist damit immer ausreichend kühl, um eine effektive Kondensation des Wasserdampfes aus dem Abgas zu gewährleisten.

In einer bevorzugten Ausgestaltung der Erfindung ist der Rücklauf aus dem Warmwasserspeicher last- und temperaturabhängig durch Ansteuerung eines Ventils gesteuert, wobei der Rücklauf wahlweise zur weiteren Abkühlung über das Wärmeübertragungssystem oder direkt zu einem Verdampfer der Wärmepumpe geleitet werden kann. Eine andere Möglichkeit, die alternativ oder zusätzlich zur lastabhängigen Steuerung verwendet werden kann, ist der Einsatz eines Ventils im Vorlauf des Heizkreislaufes, so dass der Warmwasserspeicher und das Wärmeübertragungssystem durch dieses Ventil lastabhängig betrieben werden können.

Die verschiedenen Möglichkeiten der hydraulischen Schaltung bei der Einbindung von Warmwasserspeichern orientieren sich an der Nutzungsintensität von warmem Wasser. Die einfachste Schaltung ist der Parallelbetrieb. Bei der Anforderung des warmen Wassers wird der Heizkreislauf durch ein Umschaltventil hydraulisch vom Kreislauf des Warmwasserspeichers getrennt und während der Warmwasserbereitung außer Betrieb genommen. Besitzt der Warmwasserspeicher eine Frischwasservorwärmung im Rücklauf, wird das Rücklaufwasser befriedigend weit abgekühlt. Bei größeren Anlagen wird ein Parallelbetrieb mit Mischer bevorzugt. Fordert der Warmwasserspeicher Heizleistung an, steigt die Kesseltemperatur. Bei gleichzeitigem Heizungsbetrieb regelt ein Mischer durch Zumischung von Rücklaufwasser in den Zulauf des Heizkreislaufs die Temperatur des Heizkreises. Bei Mehrkesselanlagen wird ein Kessel für die Warmwasserbereitung verwendet, während die weiteren Kessel die Heizung weiter versorgen. Die Anordnung der hydraulischen Schaltung ist vom Prinzip her immer in dem Sinne gleich, als dass der Rücklauf aus den Heizkreisläufen und der Warmwasserbereitung vermischt wieder dem Heizkessel zugeführt werden.

Bevorzugt wird der Zulauf zum Verdampfer durch den Einsatz einer Heizungswasserzumischleitung temperaturgesteuert, indem der Ablauf zum Brennwertkessel über ein Ventil Heizungswasser der Rücklaufleitung des Warmwasserspeichers zuführt (zumischt), wenn es zu warm ist und nicht im Wärmeübertragungssystem gekühlt werden kann. Dies ist insbesondere dann relevant, wenn das Wärmeübertragungssystem nicht in Betrieb ist und der Warmwasserspeicher in Betrieb ist. Die Heizwasserleitung, die den Rücklauf zum Warmwasserspeicher bildet, wird gegen Ende der Erwärmung des Warmwasserspeichers zu warm. Daher wird Wasser aus dem Heizungswasserrücklauf über die Heizungswasserzumischleitung, die auch als Bypass bezeichnet wird, temperaturgeregelt in den Zulauf zum Verdampfer zugemischt.

In einer anderen bevorzugten Ausgestaltung der Erfindung wird über ein Ventil im Rücklauf aus dem Verdampfer über eine Bypassleitung abgekühltes Heizungswasser wieder dem Zulauf zum Verdampfer zugemischt, wenn das Wärmeübertragungssystem keine Wärme benötigt aber Wärme für die Warmwasserbereitung benötigt wird.

Im Zuge der Energieeinsparung werden Heizungsanlagen vermehrt mit solarthermischen Kollektoren als Wärmequelle gekoppelt. Ein solarthermischer Heizkreislauf beheizt dabei einen Wärmespeicher - dabei handelt es sich um einen auf der Wärmelieferseite großvolumigen Wärmeübertrager -, aus dem die Verbrauchereinrichtungen die Wärme übernehmen.

Während der Übergangsjahreszeiten und im Sommer wird nur eine geringe bis keine Heizleistung benötigt aber weiterhin warmes Wasser. Klassische Heizungsanlagen mit einer Warmwasserbereitung arbeiten im Sommer vergleichsweise uneffektiv, da die Brennwerttechnik nur während des Zulaufs kalten Wassers bei Betrieb einer Vorwärmung des zulaufenden Wassers nutzbar ist. Mit Einbindung eines Solar beheizten Wärmespeichers in den Heizkreislauf lässt sich der Verbrauch fossilen Brennstoffs erheblich reduzieren. Ist der Wärmespeicher auf Grund geringer Einstrahlung nicht vollständig geladen und hat dadurch nicht die für die Warmwasserbereitung erforderliche Temperatur, wird die Wärme über eine Wärmepumpe abgenommen und über den Wärmpumpenprozess auf die benötigte Betriebstemperatur gebracht und auf das Heizungswasser im Heizkreislauf übertragen.

Kann die Solaranlage die benötigte Energie alleine aufbringen, wird der Brennwertkessel über eine Bypassleitung umgangen. Das Wärmeübertragungssystem kann als Niedertemperaturquelle für die Wärmepumpe genutzt werden, wobei es dann als Kühlsystem arbeitet. Die aus Umgebung gewonnene Wärme wird zur weiteren Erwärmung des Heizungswassers verwendet.

Bei der Heizungsanlage mit einem Brennwertkessel zur Gewinnung von Wärme zu Heizzwecken in einem Heizkreislauf mit einem Wärmeübertragungssystem und zur gleichzeitigen Bereitstellung von Warmwasser in einem Warmwasserspeicher, wobei dem Rücklauf des Heizkreislaufs eine Wärmepumpe zugeordnet ist, die mindestens einem Teil des Wassers im Rücklauf des Heizkreislaufs Wärmeenergie entzieht, ist erfindungswesentlich vorgesehen, dass der Rücklauf des Heizkreislaufes derart an einen Verdampfer der Wärmepumpe angeschlossen ist, dass der Rücklauf des Heizkreislaufs vollständig dem Verdampfer zugeführt wird und dass ein Kondensator der Wärmepumpe an den Zulauf des Warmwasserspeichers angeschlossen ist. Durch eine solche Ausgestaltung wird erreicht, dass der Rücklauf des Heizkreislaufs so kalt wie möglich ist. Dadurch wird der Brennwertkessel optimal und energiesparend betrieben.

Bevorzugt ist als Zusatzheizung eine Solarthermieanlage mit einem Wärmespeicher in die Heizungsanlage integriert. Die mit der Solarthermieanlage gewonnene Wärme wird mittels einer Wärmepumpe auf das gewünschte Temperaturniveau gebracht und über den Zulauf des Warmwasserspeichers geleitet.

In einer anderen Ausgestaltung der Erfindung wird das Wärmeübertragungssystem so ausgelegt, dass es der Umgebung Wärme entzieht und diese Wärme durch die Verwendung einer Wärmepumpe zur Temperaturerhöhung des Vorlaufs zum Warmwasserspeicher verwendet wird. Das Wärmeübertragungssystem arbeitet dann als Kühlsystem.

In einer anderen bevorzugten Ausführungsform wird die Heizungsanlage im Sommerbetrieb durch Verwendung einer Solarthermieanlage und Übertragung der Wärmeenergie aus der Umgebung zum Wärmeübertragungssystem über die Wärmepumpe auf den Vorlauf zum Warmwasserspeicher mit einer zweiten Wärmequelle ausgelegt. Dies wird bevorzugt so realisiert, dass der Heizkreislauf in zwei getrennte Kreisläufe geteilt ist, wobei der eine Kreislauf aus dem Wärmeübertragungssystem, dem Verdampfer, den Leitungen und den Ventilen besteht und durch Wärmeentzug als Kühler betrieben wird und der andere Kreislauf aus dem Kondensator der Wärmepumpe, dem Kondensator der zweiten Wärmepumpe, dem Warmwasserspeicher, dem Wärmeübertrager, dem Wärmespeicher zur Wärmeübertragung aus der Solarthermieanlage mit den Leitungen und Ventilen besteht und als Heizung arbeitet. Dabei wird die Wärmeerzeugung regenerativ betrieben.

Sollte keine Heiz- und Kühlleistung benötigt werden, lässt sich der Verdampfer für diesen Ausnahmefall mit dem Brennwertkessel auch direkt beheizen. Womit alle denkbaren Betriebszustände mit der Schaltung abgebildet werden können.

Die Vorrichtung besteht aus einem Brennwertkessel (1) mit einem Heizwertwärmeübertrager (2), einem Abgaswärmeübertrager (3), einem Wärmeübertragungssystem (4), einer Wärmepumpe (12), einem Warmwasserspeicher (6), einem Wärmeübertrager als Frischwasservorwärmer (7), den dazugehörigen Versorgungsleitungen, Frequenz gesteuerten Umwälzpumpen und Ventilen.

Das im Brennwertkessel (1) erwärmte Heizungswasser wird mit einer Pumpe (8) über die Zulaufleitung (9) einem Ventil (10) zugeführt. Von dem aus dann das Heizungswasser lastabhängig in Richtung Wärmeübertragungssystem (4) und/oder Warmwasserspeicher (6) geleitet wird. Das Heizungswasser passiert zur Warmwasserbereitung über Leitung (17) den Kondenstor (14) der Wärmepumpe (12), dann den Warmwasserspeicher (6) und kühlt dabei in Abhängigkeit der Warmwasserspeichertemperatur ab. Im Lastbetrieb, d. h. wenn kaltes Frischwasser über die Frischwasserzufuhr (5) zufließt, wird das Heizungswasser im Wärmeübertrager (7) weiter abgekühlt. Danach fließt das Heizungswasser über das Ventil (11) zum Verdampfer (13) der Wärmepumpe (12). Wird die Temperatur im Warmwasserspeicher nur gehalten, ist das Heizungswasser noch sehr warm und wird über das Ventil (11) zum Wärmeübertragungssystem (4) weiter geleitet und erst danach im Verdampfer (13) der Wärmepumpe (12) weiter abgekühlt. Das Heizungswasser gelangt dann über den Rücklauf (15) in den Abgaswärmeübertrager (3) des Brennwertkessels (1) und kann dort effektiv die Wärme aus dem Abgas gewinnen.

Die Restwärme aus dem Heizwasser wird im Verdampfer (13) in Form von Verdampfungsenthalpie eines Kältemittels übernommen und über einen Verdichter (16) auf ein höheres Temperaturniveau gebracht, so dass mit der gewonnenen Energie des Wärmeübertragungssystems (4) das Heizungswasser für die Warmwasserbereitung bis zur gewünschten Temperatur weiter erwärmt wird. Das so erwärmte Heizungswasser durchläuft über Leitung (17) den Warmwasserspeicher (6) und den Wärmeübertrager (7) und kühlt dabei ab. Der Grad der Abkühlung ist vom Betriebszustand der Warmwasserbereitung abhängig. Bei starkem Warmwasserbedarf kühlt das Heizwasser stärker ab, als dies nur z. B. für die Temperaturhaltung der Fall ist, da das zulaufende Wasser das Heizungswasser im Wärmeübertrager (7) weiter abkühlt. Übersteigt das Heizungswasser im Rücklauf (18) eine eingestellte Solltemperatur, kann es dem Zulauf (9') des Heizungswassers zum Wärmeübertragungssystem (4) zugemischt werden, damit es weiter abgekühlt werden kann und die Betriebstemperatur des Verdampfers (13) erreicht.

Besteht im Wärmeübertragungssystem (4) kein Wärmebedarf, so dass nur Wärme für die Warmwasserbereitung benötigt wird und ist das Heizungswasser im Rücklauf (18) zu warm, wird das im Verdampfer (13) abgekühlte Heizungswasser aus dem Rücklauf (15) mit Hilfe des Ventils (27) über eine Bypassleitung (26) dem Zulauf (28) zum Verdampfer (13) zur Einstellung der Verdampfertemperatur wieder zugemischt.

In einer weiteren Ausführung ist diese Vorrichtung, auch mit einer Solarthermieanlage (20) ausgestattet. In den Übergangsjahreszeiten Frühling, Herbst und im Sommer kann die Vorrichtung mindestens mit solarer Unterstützung betrieben werden. Da mehr höher temperiertes Heizungswasser zur Warmwasserbereitung benötigt wird als nieder temperiertes, wird die Wärme bevorzugt aus dem solaren Wärmespeicher (21) mittels einer Wärmepumpe (29) auf ein höheres Niveau gebracht. Sollte der solare Wärmespeicher die für die Warmwasserbereitung geforderte Temperatur erreicht haben, wird das Heizungswasser direkt in die Leitung (17) eingespeist. Die Wärmepumpe (29) ist dann abgeschaltet.

Zur Wärmeübertragung aus der Solarthermieanlage (20) wird in den Zulauf (17) ein Wärmespeicher (21) installiert, der die Wärme aus der Solarthermieanlage (20) auf das Heizungswasser überträgt. Das vorgewärmte Heizungswasser im Wärmespeicher (21) durchläuft den Verdampfer (31) der Wärmepumpe (29) und wird abgekühlt. Die Wärme wird mittels des Kondensators (30) an das Heizungswasser in Leitung (17) des Heizkreislaufs übergeben. Das Heizungswasser durchläuft dann den Kondensator (14) der Wärmepumpe (12) um dann das den Warmwasserspeicher (6) zu erwärmen. Nachdem das Heizungswasser den Wärmeübertrager (7) über den Rücklauf (18) verlassen hat, wird es bei noch ausreichendem Wärmeinhalt durch das Wärmeübertragungssystem (4) geleitet oder, wenn der Wärmegehalt zum Heizen nicht ausreichend ist, direkt wieder dem Verdampfer (13) der Wärmepumpe (12) zugeführt und weiter abgekühlt. Besteht bei ausreichendem Wärmegehalt kein Wärmebedarf, wird das Heizungswasser im Rücklauf (18) mittels Umschaltung des Ventils (22) über die Kurzschlussleitung (19) wieder direkt in den Zulauf (17) geleitet und je nach Betriebszustand dem Kondensator (30) der Wärmepumpe (29) oder dem Wärmespeicher (21) zugeführt. Im Sommerbetrieb kann bei ausreichender Größe der Solarthermieanlage (20) der Brennwertkessel (1) komplett außer Betrieb genommen und mittels einer Bypassleitung (23), die über das Ventil (24) freigegeben wird, umgangen werden.

Im Sommerbetrieb kann über die eingebauten Ventile (10, 11, 22, 24) der hydraulische Kreis des Heizungswassers in zwei Kreislaufsysteme getrennt werden. Der Warmwasserkreislauf wird aus den Komponenten Zulauf (17) zum Kondensator (14) der Wärmepumpe (12) mit der Umwälzpumpe (25), dem Kondensator (30) der Wärmepumpe (29) bzw. Wärmespeicher (21), Warmwasserspeicher (6), Wärmeübertrager (7) und Rücklauf (18) über die Ventile (11) und (22) gebildet. Der zweite Kreislauf besteht aus dem Zulauf (9, 9') über Mischventil (10) mit der Umwälzpumpe (8), dem Wärmeübertragungssystem (4), dem Verdampfer (13) der Wärmepumpe (12), dem Rücklauf (15) und über Ventil (24) der Bypassleitung (23). Die beiden Kreisläufe sind wärmeübertragend durch die Wärmepumpe (12) miteinander verbunden. Der Kreislauf auf der Lieferseite des Verdampfers (13) der Wärmepumpe (12) ist mit dem Wärmeübertragungssystem (4) in der Lage, der Umgebung Wärme zu entziehen und als Kühlung zu arbeiten. Die der Umgebung entzogene Wärme kann dann mittels des Verdampfers (13) und des Verdichters (16) auf den Kondensator (14) der Wärmepumpe (12) und auf die Zuleitung (17) zum Warmwasserspeicher (6) übertragen werden, so dass mit der Umgebungswärme der Warmwasserspeicher beheizt wird.

### Bezugszahlenliste:

1 Brennwertkessel
2 Heizwertwärmeübertrager
3 Brennwertwärmeübertrager
4 Wärmeübertragungssystem
5 Frischwasserzulauf
6 Warmwasserspeicher
7 Wärmeübertrage
8 Umwälzpumpe
9 Heizungswasserleitung Vorlauf
10 Ventil
11 Ventil
12 Wärmepumpe
13 Verdampfer
14 Kondensator
15 Heizungswasserleitung Rücklauf
16 Kompressor
17, 17' Heizungswasserleitung Zulauf Warmwasserspeicher
18, 18' Heizwasserleitung Rücklauf Warmwasserspeicher
19 Heizungswasserleitung Kurzschlussleitung
20 Solarthermieanlage
21 Wärmespeicher
22 Ventil
23 Heizwasserleitung Brennwertkesselumgehung
24 Ventil
25 Umwälzpumpe
26 Heizungswasser Zumischleitung/Bypass
27 Ventil
28 Zulauf Verdampfer
29 Wärmepumpe
30 Kondensator
31 Verdampfer

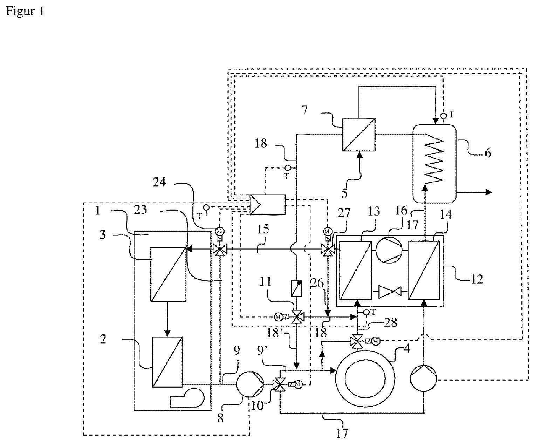

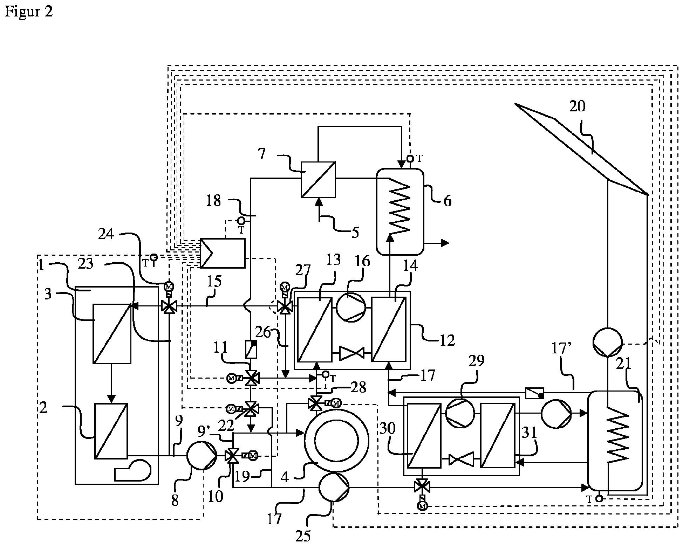

## Patentansprüche

1. Verfahren zum Betrieb einer Heizungsanlage mit einem Brennwertkessel (1) zur Gewinnung von Wärme zu Heizzwecken in einem Heizkreislauf mit einem Wärmeübertragungssystem (4) und zur gleichzeitigen Bereitstellung von warmen Wasser in einem Warmwasserspeicher (6), wobei einem Rücklauf des Heizkreislaufes eine Wärmepumpe (12) zugeordnet ist, die mindestens einem Teil des Wasser im Rücklauf des Heizkreislaufes Wärmeenergie entzieht,
**dadurch gekennzeichnet,**
**dass** der Rücklauf (28) des Wärmeübertragungssystems (4) des Heizkreislaufes vollständig durch einen Verdampfer (13) der Wärmepumpe (12) geführt wird, und
**dass** die in der Wärmepumpe (12) gewonnene Wärme auf einem höheren Temperaturniveau an einen Zulauf (17) zum Warmwasserspeicher (6) abgegeben wird.

2. Verfahren nach Anspruch 1, **dadurch gekennzeichnet, dass** der Rücklauf (18) aus dem Warmwasserspeicher (6) last- und temperaturabhängig durch Ansteuerung eines Ventils (11) wahlweise zur weiteren Abkühlung über das Wärmeübertragungssystem (4) oder direkt zu einem Verdampfer (13) der Wärmepumpe (12) geleitet werden kann.

3. Verfahren nach einem der Ansprüche 1 oder 2, **dadurch gekennzeichnet, dass** der Warmwasserspeicher (6) und das Wärmeübertragungssystem (4) durch den Einsatz eines Ventils (10) in einem Vorlauf (9) lastabhängig betrieben werden können.

4. Verfahren nach einem der vorhergehenden Ansprüche, **dadurch gekennzeichnet, dass** im Zulauf (28) zum Verdampfer (13) durch den Einsatz einer Heizungswasserzumischleitung (26) die Temperatur gesteuert werden kann, indem die Rücklaufleitung (18) vom Warmwasserspeicher (6) aus dem Ablauf (15) zum Brennwertkessel (1) über ein Ventil (27) Heizungswasser erhält, wenn es zu warm ist und nicht im Wärmeübertragungssystem (4) gekühlt werden kann.

5. Verfahren nach einem der vorhergehenden Ansprüche, **dadurch gekennzeichnet, dass** über ein Ventil (27) im Rücklauf (15) aus dem Verdampfer (13) über eine Bypassleitung (26) abgekühltes Heizungswasser wieder dem Zulauf (28) zum Verdampfer (13) zugemischt wird, wenn das Wärmeübertragungssystem (4) keine Wärme benötigt, aber Wärme für die Warmwasserbereitung benötigt wird.

6. Verfahren nach einem der Ansprüche 1 bis 5, **dadurch gekennzeichnet, dass** als Zusatzheizung eine Solarthermieanlage (20) mit einem Wärmespeicher (21) integriert ist und die mit der Solarthermieanlage (20) gewonnene Wärme direkt über den Zulauf (17') dem Zulauf (17) des Warmwasserspeichers (6) zugeführt wird.

7. Verfahren nach einem der Ansprüche 1 bis 6, **dadurch gekennzeichnet, dass** als Zusatzheizung eine Solarthermieanlage (20) mit einem Wärmespeicher (21) integriert ist und die mit der Solarthermieanlage (20) gewonnene Wärme mittels einer zweiten Wärmepumpe (29) auf dem gewünschten Temperaturniveau dem Zulauf (17) des Warmwasserspeichers (6) zugeführt wird.

8. Heizungsanlage mit einem Brennwertkessel zur Gewinnung von Wärme zu Heizzwecken in einem Heizkreislauf mit einem Wärmeübertragungssystem (4) und zur gleichzeitigen Bereitstellung von Warmwasser in einem Warmwasserspeicher (6), wobei einem Rücklauf des Heizkreislaufes eine Wärmepumpe (12) zugeordnet ist, die mindestens einem Teil des Wassers im Rücklauf des Heizkreislaufes Wärmeenergie entzieht,
**dadurch gekennzeichnet,**
**dass** der Rücklauf (28) des Heizkreislaufes derart an einen Verdampfer (13) der Wärmepumpe (12) angeschlossen ist, dass der Rücklauf des Heizkreislaufes vollständig dem Verdampfer zugeführt wird und
**dass** ein Kondensator (14) der Wärmepumpe (12) an den Zulauf (17) des Warmwasserspeichers (6) angeschlossen ist.

9. Heizungsanlage nach Anspruch 8, **dadurch gekennzeichnet, dass** als Zusatzheizung eine Solarthermieanlage (20) mit einem Wärmespeicher (21) integriert ist und dass die Solarthermieanlage (20) mit einer zweiten Wärmepumpe (29) verbunden ist, die dazu ausgelegt und vorgesehen ist, die mit der Solarthermieanlage (20) gewonnene Wärme auf das gewünschte Temperaturniveau zu heben und mit dem Zulauf (17) des Warmwasserspeichers (6) verbunden ist.

10. Heizungsanlage nach einem der Ansprüche 7 oder 8, **dadurch gekennzeichnet, dass** das Wärmeübertragungssystem (4) dazu ausgelegt und vorgesehen ist, der Umgebung Wärme zu entziehen und diese Wärme durch die Verwendung der Wärmepumpe (12) zur Temperaturerhöhung des Vorlaufs (17) zum Warmwasserspeicher (6) verwendet werden kann.

11. Heizungsanlage nach einem der Ansprüche 8 bis 10, **dadurch gekennzeichnet, dass** die Vorrichtung für einen Sommerbetrieb mit einer zweiten Wärmequelle ausgelegt ist, die durch Betreiben einer Solarthermieanlage (20) und Übertragung der Wärmeenergie aus der Umgebung zum Wärmeübertragungssystem (4) über die Wärmepumpe (12) auf den Vorlauf (17) zum Warmwasserspeicher (6) gebildet ist.

12. Heizungsanlage nach Anspruch 11, **dadurch gekennzeichnet, dass** der Heizkreislauf in zwei getrennte Kreisläufe geteilt ist, wobei der eine Kreislauf aus dem Wärmeübertragungssystem (4), dem Verdampfer (13), den Leitungen (15, 23, 9 und 28) und den Ventilen (10 und 24) besteht und durch Wärmeentzug als Kühler betreibbar ist und der andere Kreislauf aus dem Kondensator (30) der zweiten Wärmepumpe (29), dem Kondensator (14) der Wärmepumpe (12), dem Warmwasserspeicher (6), dem Wärmeübertrager (7), dem Wärmespeicher (21) zur Wärmeübertragung aus der Solarthermieanlage (20) mit den Leitungen (17, 17', 18 und 19) und Ventilen (11 und 22) besteht und als Heizung arbeitet.

## Claims

1. A method for operating a heating system with a condensing boiler (1), for obtaining heat for heating purposes in a heating circuit with a heat transfer system (4), and for simultaneously providing hot water in a hot water storage tank (6), wherein a heat pump (12) is assigned to a return flow of the heating circuit, which heat pump extracts heat energy from at least some of the water in the return flow of the heating circuit,
**characterised**
**in that**, the return flow (28) of the heat transfer system (4) of the heating circuit is fully guided through an evaporator (13) of the heat pump (12), and
**in that**, the heat obtained in the heat pump (12) is emitted at a higher temperature level to an inflow (17) to the hot water storage tank (6).

2. The method in accordance with claim 1, **characterised in that**, the return flow (18) from the hot water storage tank (6) can be led as a function of load and temperature by the actuation of a valve (11), either for further cooling via the heat transfer system (4), or directly to an evaporator (13) of the heat pump (12) .

3. The method in accordance with one of the claims 1 or 2, **characterised in that**, the hot water storage tank (6) and the heat transfer system (4) can be operated as a function of load by the deployment of a valve (10) in a supply flow (9).

4. The method in accordance with one of the preceding claims, **characterised in that**, the temperature can be controlled in the inflow (28) to the evaporator (13) by the deployment of a heating water admixing line (26), **in that** the return flow line (18) receives heating water from the hot water storage tank (6) from the outflow (15) to the condensing boiler (1) via a valve (27), if it is too hot and cannot be cooled in the heat transfer system (4).

5. The method in accordance with one of the preceding claims, **characterised in that**, heating water cooled via a bypass line (26) via a valve (27) in the return flow (15) from the evaporator (13) is again mixed with the inflow (28) to the evaporator (13), if the heat transfer system (4) does not require heat, but heat is required for the provision of hot water.

6. The method in accordance with one of the claims 1 to 5, **characterised in that**, a solar thermal system (20) with a heat accumulator (21) is integrated as additional heating, and the heat obtained with the solar thermal system (20) is fed directly via the inflow (17') to the inflow (17) of the hot water storage tank (6).

7. The method in accordance with one of the claims 1 to 6, **characterised in that**, a solar thermal system (20) with a heat accumulator (21) is integrated as additional heating, and the heat obtained with the solar thermal system (20) is supplied to the inflow (17) of the hot water storage tank (6) at the desired temperature level by means of a second heat pump (29).

8. A heating system with a condensing boiler for obtaining heat for heating purposes in a heating circuit with a heat transfer system (4), and for simultaneously providing hot water in a hot water storage tank (6), wherein a heat pump (12) is assigned to a return flow of the heating circuit, which heat pump extracts thermal energy from at least some of the water in the return flow of the heating circuit,
**characterised**
**in that**, the return flow (28) of the heating circuit is connected to an evaporator (13) of the heat pump (12) such that the return flow of the heating circuit is fed completely to the evaporator, and
**in that** a condenser (14) of the heat pump (12) is connected to the inflow (17) of the hot water storage tank (6).

9. The heating system in accordance with claim 8, **characterised in that**, a solar thermal system (20) with a heat accumulator (21) is integrated as additional heating, and **in that** the solar thermal system (20) is connected to a second heat pump (29), which is designed and provided for raising the heat obtained with the solar thermal system (20) to the desired temperature level, and is connected to the inflow (17) of the hot water storage tank (6).

10. The heating system in accordance with one of the claims 7 or 8, **characterised in that**, the heat transfer system (4) is designed and provided to extract heat from the environment, and the said heat can be used by the application of the heat pump (12) to increase the temperature of the supply flow (17) to the hot water storage tank (6).

11. The heating system in accordance with one of the claims 8 to 10, **characterised in that**, the device is designed for summer operation with a second heat source, which is formed by operating a solar thermal system (20) and transferring the heat energy from the environment to the heat transfer system (4) via the heat pump (12) to the supply flow (17) to the hot water storage tank (6).

12. The heating system in accordance with claim 11, **characterised in that**, the heating circuit is divided into two separate circuits, wherein the one circuit consists of the heat transfer system (4), the evaporator (13), the pipes (15, 23, 9 and 28) and the valves (10 and 24), and can be operated as a cooler by heat extraction, and the other circuit consists of the condenser (30) of the second heat pump (29), the condenser (14) of the heat pump (12), the hot water storage tank (6), the heat exchanger (7), the heat accumulator (21) for heat transfer from the solar thermal system (20) with the lines (17, 17', 18 and 19) and valves (11 and 22), and operates as a heater.

## Revendications

1. Procédé, destiné à faire fonctionner une installation de chauffage, pourvue d'une chaudière à condensation (1), dans le but de générer de la chaleur à des fins de chauffage dans un circuit de chauffage, à l'aide d'un système de transfert thermique (4) et de mettre à disposition simultanément de l'eau chaude dans un ballon d'eau chaude (6), à un circuit retour du circuit de chauffage étant associée une pompe à chaleur (12) qui soutire de l'énergie thermique à au moins une partie de l'eau dans le circuit retour du circuit de chauffage,
**caractérisé**
**en ce que** le circuit retour (28) du système de transfert thermique (4) du circuit de chauffage est totalement conduit à travers un évaporateur (13) de la pompe à chaleur (12) et
**en ce que** la chaleur générée dans la pompe à chaleur (12) est délivrée à un niveau de température plus élevé à une arrivée (17) dans le ballon d'eau chaude (6).

2. Procédé selon la revendication 1, **caractérisé en ce que** le circuit retour (18) du ballon d'eau chaude (6) peut être dirigé en fonction de la charge et de la température par activation d'une soupape (11), au choix pour un refroidissement ultérieur via le système de transfert thermique (4) ou directement vers un évaporateur (13) de la pompe à chaleur (12).

3. Procédé selon l'une quelconque des revendications 1 ou 2, **caractérisé en ce que** par l'utilisation d'une soupape (10), on peut faire fonctionner le ballon d'eau chaude (6) et le système de transfert thermique (4) dans un circuit aller (9).

4. Procédé selon l'une quelconque des revendications précédentes, **caractérisé en ce que** dans l'arrivée (28) vers l'évaporateur (13) par l'utilisation d'un conduit mélangeur d'eau de chauffage (26), la température peut être contrôlée **en ce que** le conduit retour (18) du ballon d'eau chaude (6) de la sortie (15) vers la chaudière à condensation (1) reçoit de l'eau chaude via une soupape (27) si elle est trop chaude et ne peut pas être refroidie dans le système de transfert thermique (4).

5. Procédé selon l'une quelconque des revendications précédentes, **caractérisé en ce que** via une soupape (27) dans le circuit retour (15), de l'eau de chauffage refroidie hors de l'évaporateur (13) via un conduit de dérivation (26) est de nouveau mélangée à l'arrivée (28) vers l'évaporateur (13) si le système de transfert thermique (4) ne nécessite aucune chaleur, mais si de la chaleur est nécessaire pour la préparation d'eau chaude.

6. Procédé selon l'une quelconque des revendications 1 à 5, **caractérisé en ce qu'**en tant que chauffage additionnel est intégrée une installation solaire thermique (20) pourvue d'un accumulateur de chaleur (21) et **en ce que** la chaleur générée à l'aide de l'installation solaire thermique (20) est alimentée directement via l'arrivée (17') vers l'arrivée (17) du ballon d'eau chaude (6).

7. Procédé selon l'une quelconque des revendications 1 à 6, **caractérisé en ce qu'**en tant que chauffage additionnel est intégrée une installation solaire thermique (20) pourvue d'un accumulateur de chaleur (21) et **en ce que** la chaleur générée à l'aide de l'installation solaire thermique (20) est alimentée au moyen d'une deuxième pompe à chaleur (29) au niveau de température souhaité, vers l'arrivée (17) du ballon d'eau chaude (6).

8. Installation de chauffage pourvue d'une chaudière à condensation, dans le but de générer de la chaleur à des fins de chauffage dans un circuit de chauffage, à l'aide d'un système de transfert thermique (4) et de mettre à disposition simultanément de l'eau chaude dans un ballon d'eau chaude (6), à un circuit retour du circuit de chauffage étant associée une pompe à chaleur (12) qui soutire de l'énergie thermique à au moins une partie de l'eau dans le circuit retour du circuit de chauffage,
**caractérisée**
**en ce que** le circuit retour (28) du circuit de chauffage est raccordé sur un évaporateur (13) de la pompe à chaleur (12) de telle sorte que le circuit retour du circuit de chauffage soit totalement alimenté vers l'évaporateur et
**en ce qu'**un condensateur (14) de la pompe à chaleur (12) est raccordé sur l'arrivée (17) du ballon d'eau chaude (6).

9. Installation de chauffage selon la revendication 8, **caractérisée en ce qu'**en tant que chauffage additionnel est intégrée une installation solaire thermique (20) pourvue d'un accumulateur de chaleur (21) et **en ce que** l'installation solaire thermique (20) est reliée avec une deuxième pompe à chaleur (29) qui est conçue et prévue pour relever la chaleur générée avec l'installation solaire thermique (20) au niveau de température souhaité et qui est reliée avec l'arrivée (17) du ballon d'eau chaude (6).

10. Installation de chauffage selon l'une quelconque des revendications 7 ou 8, **caractérisé en ce que** le système de transfert thermique (4) est conçu et prévu pour soutirer de la chaleur à l'environnement et **en ce que** par l'utilisation de la pompe à chaleur (12), cette chaleur peut être utilisée pour relever la température du circuit aller (17) vers le ballon d'eau chaude (6).

11. Installation de chauffage selon l'une quelconque des revendications 8 à 10, **caractérisé en ce que** le dispositif est conçu pour un mode été avec une deuxième source thermique, par le fonctionnement d'une installation solaire thermique (20) et la transmission de l'énergie thermique émanant de l'environnement vers le système de transfert thermique (4) via la pompe à chaleur (12) sur le circuit aller (17) vers le ballon d'eau chaude (6).

12. Installation de chauffage selon la revendication 11, **caractérisé en ce que** le circuit de chauffage est divisé en deux circuits séparés, l'un des circuits étant constitué du système de transfert thermique (4), de l'évaporateur (13), des conduits (15, 23, 9 et 28) et des soupapes (10 et 24) et par soutirage de chaleur pouvant faire office de refroidisseur et l'autre circuit étant constitué du condensateur (30) de la deuxième pompe à chaleur (29), du condensateur (14) de la pompe à chaleur (12), du ballon d'eau chaude (6), de l'échangeur thermique (7), de l'accumulateur de chaleur (21) pour la transmission de chaleur à partir de l'installation solaire thermique (20) avec les conduits (17, 17', 18 et 19) et les soupapes (11 et 22) et officiant en tant que chauffage.
